# EUROPÄISCHE PATENTSCHRIFT

(11) **EP 1 818 190 B1**
(45) Veröffentlichungstag und Bekanntmachung des Hinweises auf die Patenterteilung: **26.11.2008**
(21) Anmeldenummer: 06126441.2
(22) Anmeldetag: 19.12.2006
(51) Int. Cl.: B60C 15/04

(54) **Fahrradreifen**
Bicycle tire
Bandage pneumatique pour bicyclette

(30) Priorität: 11.02.2006 DE 102006006394
(43) Veröffentlichungstag der Anmeldung: 15.08.2007
(73) Patentinhaber: Continental Aktiengesellschaft, 30165 Hannover (DE)
(72) Erfinder: Bende, Wolfgang, 35108 Allendorf (DE); Klapp, Wolfgang, 34497 Korbach (DE)

(56) Entgegenhaltungen:
- EP-A1- 0 715 976
- WO-A-20/05039894

## Beschreibung

Die Erfindung betrifft faltbare Fahrradreifen, aufweisend zwei Wulstkerne aus nicht-metallischen Garnen, eine um die Wulstkerne geschlungene Karkasse, vorzugsweise eine Diagonalkarkasse, die aus zumindest einer Lage aus textilen Festigkeitsträgern gebildet ist, und einen Laufstreifen.

Faltbare Fahrradreifen gemäß dem Oberbegriff des Anspruchs 1 und Verfahren zu deren Herstellung sind z. B. aus der US 4,378,042 und der US 4,435,236 bekannt. Faltbare Fahrradreifen zeichnen sich dadurch aus, dass ihre Wulstkerne aus leichten, flexiblen nicht-metallischen Garnen gebildet werden, wohingegen herkömmliche nicht faltbare Fahrradreifen Stahlwulstkerne aufweisen. Die Verwendung des nicht-metallischen Materials für die Wulstkerne bewirkt, dass der Fahrradreifen sich nach dem Zusammenfalten wieder in die ursprüngliche Reifenform bringen lässt, ohne dass Knicke im Kern verbleiben, wie dies bei Stahlkernen der Fall wäre. Zusätzlich bewirkt der Ersatz der Stahlkerne durch nicht-metallische Garne als Wulstmaterial eine Gewichtsreduktion des Reifens.
Faltbare Fahrradreifen lassen sich Platz sparend transportieren und auch auf dem Fahrrad ohne Probleme mitführen, so dass sie im Pannenfall kurzfristig zur Verfügung stehen.

Es ist aus der US 4,378,042 bekannt, als nicht-metallisches Material für die Wulstkerne von faltbaren Fahrradreifen Garne aus Polyamidfasern, Aramidfasern, Glasfasern oder Kohlefasern zu verwenden, die dann in Form von 3 bis 5 Wicklungen den Wulstkern bilden. Faltbare Fahrradreifen mit Wulstkernen aus diesen Fasern weisen nicht für alle Einsatzzwecke eine ausreichende Platzdrucksicherheit (Platzdruck: Druck, bei dem der Reifen von der Felge springt) bei möglichst geringem Gewicht auf.

Der Erfindung liegt daher die Aufgabe zu Grunde, einen faltbaren Fahrradreifen bereitzustellen, der eine erhöhte Platzdrucksicherheit bei verringertem Gewicht aufweist.

Gelöst wird die Aufgabe gemäß Anspruch 1 dadurch, dass die Wulstkerne als textile Festigkeitsträger Multifilamentgarne aus Polyester-polyarylat-Filamenten enthalten, wobei die Filamente aus geschmolzenem Flüssigkristallpolymer gesponnen sind.

Überraschenderweise ermöglicht es der Einsatz der Multifilamentgarne aus Polyester-polyarylat-Filamenten, im Vergleich zu Aramid bei geringerem Gewicht eine hohe Platzdrucksicherheit (Platzdruckfestigkeit) bei Fahrradreifen zu gewährleisten. Die Platzdrucksicherheit bleibt auch über einen langen Gebrauchszeitraum erhalten, da Multifilamentgarne aus Polyester-polyarylat-Filamenten keine Kriechneigung aufweisen.

Der erfindungsgemäße Fahrradreifen zeichnet sich zusätzlich durch eine gute Montierbarkeit und eine verbesserte Anscheuerungsbeständigkeit des Kerns aus. Die Verwendung von Multifilamentgarnen aus Polyester-polyarylat-Filamenten bietet außerdem den Vorteil, dass das Material eine geringe Neigung zur Feuchtigkeitsaufnahme zeigt, was in einer sichereren Gummi-Wulstkern-Haftung resultiert.

Den Einsatz von Multifilamentgarnen aus Polyester-polyarylat-Filamenten im Fahrradreifen offenbart die WO 05/039894 A1. In dieser Schrift werden die Multifilamentgarne aus Polyester-polyarylat-Filamenten in einer Verstärkungslage, die zwischen Laufstreifen und Karkasse angeordnet ist, eingesetzt und bewirken beim Fahrradreifen eine hohe Durchstichfestigkeit.

Gemäß einer bevorzugten Weiterbildung der Erfindung enthält das Multifilamentgarn mehr als 200 Polyester-polyarylat-Filamente. Dadurch wird eine besonders hohe Platzdrucksicherheit erzielt.

Gemäß einer vorteilhaften Weiterbildung der Erfindung weisen die Polyester-polyarylat-Filamente einen Durchmesser von weniger als 40 µm auf. Bei Verwendung derartig dünner Filamente erzielt man eine gute dynamische Haltbarkeit und eine große Oberfläche des Festigkeitsträgers, wobei Letzteres zu einer guten Haftung zur umgebenden Kautschukmischung beiträgt.

Für eine optimale Anwendung als Wulstkernmaterial für Fahrradreifen hat es sich als sinnvoll erwiesen, wenn die Multifilamentgarne eine Feinheit von 700 bis 3500 dtex aufweisen.

Das Polyester-polyarylat weist bevorzugt folgende Struktur auf:

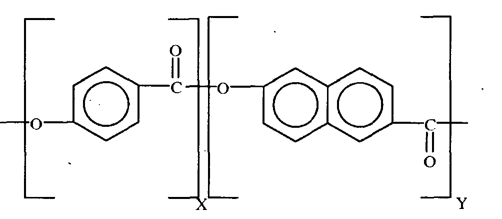

Es können z. B. Multifilamentgarne des Typs Vectran^{®} der Kuraray America Inc., USA, verwendet werden. Mit Garnen aus diesem Polymer kann eine besonders hohe Platzdrucksicherheit bei niedrigem Reifengewicht erzielt werden.

Gemäß einer bevorzugten Weiterbildung der Erfindung sind die Wulstkerne aus drei bis zehn Wicklungen, besonders bevorzugt drei bis fünf Wicklungen, der Multifilamentgarne gebildet.

Um den Fahrradreifen hinsichtlich seiner Pannensicherheit zu verbessern, kann die Karkasse als textile Festigkeitsträger Multifilamentgarne aus Polyester-polyarylat-Filamenten enthalten. Insbesondere die Durchstichfestigkeit der Reifenflanken wird dadurch verbessert.

Die Durchstichfestigkeit der Reifenflanken lässt sich auch verbessern, indem beim erfindungsgemäßen Reifen eine zusätzliche Flankenschutzlage (Anscheuerungsschutz) aus zumindest einer Lage aus textilen Festigkeitsträgern, vorzugsweise ebenfalls aus Multifilamentgarnen aus Polyester-polyarylat-Filamenten, an der Außenseite der Karkasse im Bereich der Seitenwände vorgesehen ist.

Die Pannensicherheit der Fahrradreifen kann weiter dadurch verbessert werden, dass zumindest eine zusätzliche Verstärkungslage, die Festigkeitsträger enthält und die zwischen Karkasse und Laufstreifen und/oder zwischen den Karkasslagen unterhalb des Laufstreifens und/oder innerhalb des Laufstreifens angeordnet ist, aufweist. Auch diese Verstärkungslage kann Multifilamentgarne aus Polyester-polyarylat-Filamenten enthalten.

Der erfindungsgemäße Fahrradreifen kann nach herkömmlichen Verfahren, die für den Fahrradreifenbau bekannt sind, hergestellt werden. Die Karkasse wird dabei zunächst auf eine Aufbautrommel aufgelegt. Dann werden die Wulstkerne durch Aufspulen der Multifilamentgarne aus Polyester-polyarylat-Filamenten an den entsprechenden Stellen erzeugt, wobei die Garne zur Bildung eines Wulstkernes drei- bis siebenmal um die Trommel gewickelt werden. Die Multifilamentgarne aus Polyester-polyarylat-Filamenten können vor der Gummierung mit der Kautschukmischung mit Haftvermittlersubstanzen zur besseren Haftung zwischen Gummi und Garn versehen werden. Anschließend wird die Karkasse um die Wulstkerne geklappt. Die Karkasse kann dabei in Zenitüberlappungs-, Monoband- oder Galgenschlingenaufbauweise aufgebaut werden. Die ggf. vorliegenden Flankenschutzlagen können ebenso wie die ggf. vorliegenden Pannenschutzlagen auf die auf der Trommel aufliegenden Karkasse aufgelegt werden. Im Anschluss wird der Laufstreifenmischungsrohling aufgelegt und der gesamte Verbund unter Bildung des Laufstreifenprofils vulkanisiert.

Im Folgenden wird die Erfindung anhand eines Ausführungsbeispiels im Zusammenhang mit der nachstehenden Figur näher erläutert, ohne jedoch auf dieses Beispiel beschränkt zu sein.

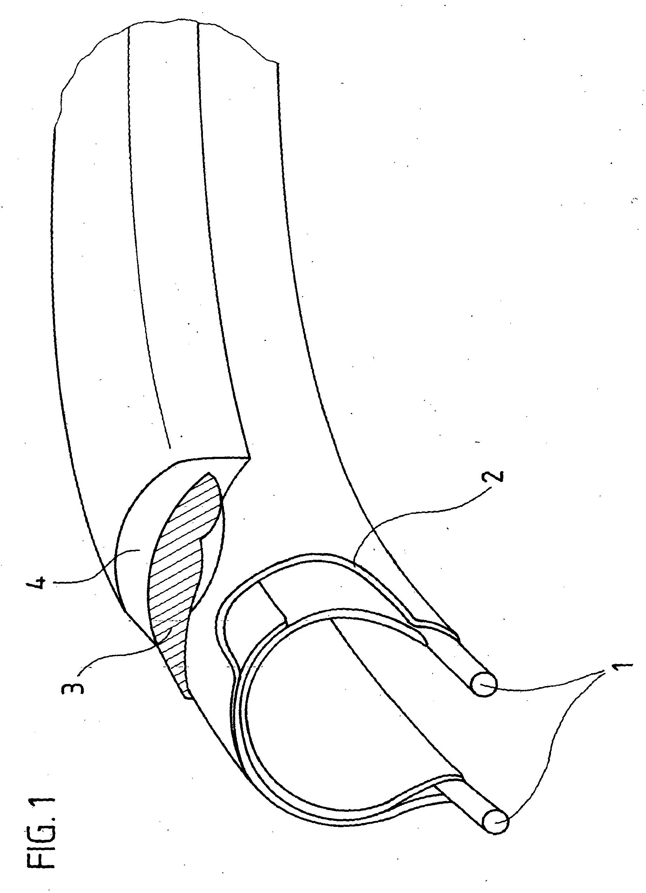

Die einzige Figur zeigt schematisch den Schnitt durch einen erfindungsgemäßen Fahrradreifen.

Der Fahrradreifen weist Wulstkerne 1, eine Karkasse 2, die um die Wulstkerne 1 geschlagen ist und unterhalb des Laufstreifens 4 überlappt, eine Verstärkungslage 3 und einen Laufstreifen 4 auf. Die Wulstkerne bestehen aus Multifilamentgarnen aus Polyester-polyarylat-Filamenten.

Es wurden faltbare Fahrradsportreifen in vier verschiedenen Ausführungen in Zenitüberlappungsbauweise der Karkasse hergestellt (Reifen 1 bis 4). Bei dieser Aufbauweise befinden sich unter dem Laufstreifen drei Lagen Karkassmaterial aus einem Nyloncordgewebe (s. Fig). Die Reifen unterschieden sich nur in der Art des Wulstkernmaterials. Bei dem Vergleichsreifen 1 bestanden die Wulstkerne aus 5 Wicklungen aus Aramid-Multifilamentgarn mit einer Konstruktion von dtex 3360 x 3 (Twaron^{®} 1000, Teijin Twaron BV, Niederlande). Bei den erfindungsgemäßen Reifen 2 bis 4 bestanden die Wulstkerne aus 4 bis 6 Wicklungen aus Multifilamentgarn mit einer Konstruktion von dtex 3340 x 3. Das Multifilamentgarn bestand aus Polyester-polyarylat-Filamenten (Vectran^{®}, Kuraray America Inc. USA). Die Reifen wurden hinsichtlich ihres Gewichtes, ihrer Montagefähigkeit und ihres Platzdruckes gemäß folgender Versuchsbeschreibung untersucht:
Platzdruck: Befüllen des Reifens auf Felge mit Wasser bis zum Platzen.

Die Ergebnisse der Versuche sind in Tabelle 1 dargestellt.

**Tabelle 1**

| | 1 (Vergl.) | 2 (Erf.) | 3 (Erf.) | 4 (Erf.) |
|---|---|---|---|---|
| Anzahl Wicklungen | 5 | 4 | 5 | 6 |
| Gewicht (g) | 209 | 205 | 206 | 213 |
| Montage | gut | gut | gut | gut |
| Platzdruck (bar) | 18,5 | 13,5 | 20,3 | 22,0 |

Aus der Tabelle 1 wird ersichtlich, dass bei gleicher Anzahl von Wicklungen im Kern, die erfindungsgemäßen Reifen 3 mit den Wulstkernen aus Vectran^{®} bei verringertem Gewicht eine höhere Platzdrucksicherheit aufweisen als die Reifen 1 mit Wulstkernen aus Aramid. Erhöht man die Anzahl der Wicklungen kann man noch bessere Platzdruckfestigkeiten erzielen. Im Gegensatz zu Aramid zeigen Multifilamentgarne aus Polyester-polyarylat-Filamenten keine Kriechneigung, was eine Platzdrucksicherheit auch über einen langen Gebrauchszeitraum gewährleistet.

## Patentansprüche

1. Faltbarer Fahrradreifen, aufweisend zwei Wulstkerne (1) aus nicht-metallischen Garnen, eine um die Wulstkerne (1) geschlungene Karkasse (2), vorzugsweise eine Diagonalkarkasse, die aus zumindest einer Lage aus textilen Festigkeitsträgern gebildet ist, und einen Laufstreifen (4),
**dadurch gekennzeichnet, dass** die Wulstkerne (1) als textile Festigkeitsträger Multifilamentgarne aus Polyester-polyarylat-Filamenten enthalten, wobei die Filamente aus geschmolzenem Flüssigkristallpolymer gesponnen sind.

2. Faltbarer Fahrradreifen nach Anspruch 1, **dadurch gekennzeichnet, dass** das Multifilamentgarn mehr als 200 Polyester-polyarylat-Filamente enthält.

3. Faltbarer Fahrradreifen nach Anspruch 1 oder 2, **dadurch gekennzeichnet, dass** die Polyester-polyarylat-Filamente einen Durchmesser von weniger als 40 µm aufweisen.

4. Faltbarer Fahrradreifen nach zumindest einem der vorhergehenden Ansprüche, **dadurch gekennzeichnet, dass** die Multifilamentgarne eine Feinheit von 700 bis 3500 dtex auf weisen.

5. Faltbarer Fahrradreifen nach zumindest einem der vorhergehenden Ansprüche, **dadurch gekennzeichnet, dass** das Polyester-polyarylat folgende Struktur aufweist:

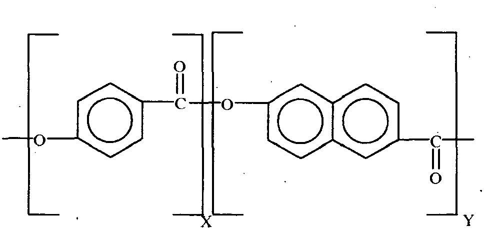

6. Faltbarer Fahrradreifen nach zumindest einem der vorhergehenden Ansprüche, **dadurch gekennzeichnet, dass** die Wulstkerne (1) aus drei bis zehn Wicklungen der Multifilamentgarne gebildet sind.

7. Faltbarer Fahrradreifen nach zumindest einem der vorhergehenden Ansprüche, **dadurch gekennzeichnet, dass** die Karkasse (2) als textile Festigkeitsträger Multifilamentgarne aus Polyester-polyarylat-Filamenten enthält, wobei die Filamente aus geschmolzenem Flüssigkristallpolymer gesponnen sind.

8. Faltbarer Fahrradreifen nach zumindest einem der vorhergehenden Ansprüche, **dadurch gekennzeichnet, dass** er zusätzlich eine Flankenschutzlage aus zumindest einer Lage aus textilen Festigkeitsträgern an der Außenseite der Karkasse (2) im Bereich der Seitenwände aufweist.

9. Faltbarer Fahrradreifen nach zumindest einem der vorhergehenden Ansprüche, **dadurch gekennzeichnet, dass** er zumindest eine zusätzliche Verstärkungslage (3), die Festigkeitsträger enthält und die zwischen Karkasse (2) und Laufstreifen (4) und/oder zwischen den Karkasslagen unterhalb des Laufstreifens (4) und/oder innerhalb des Laufstreifens (4) angeordnet ist, aufweist.

## Claims

1. Foldable bicycle tyre comprising two bead cores (1) of non-metallic yarns, a carcase (2) folded around the bead cores (1), preferably a diagonal carcase formed of at least one ply of textile strengthening members, and a tread strip (4), **characterized in that** the bead cores (1) contain multifilament yarns of polyester polyarylate filaments as textile strengthening members, the filaments having been spun from molten liquid crystal polymer.

2. Foldable bicycle tyre according to Claim 1, **characterized in that** the multifilament yarn contains more than 200 polyester polyarylate filaments.

3. Foldable bicycle tyre according to Claim 1 or 2, **characterized in that** the polyester polyarylate filaments are less than 40 µm in diameter.

4. Foldable bicycle tyre according to at least one of the preceding claims, **characterized in that** the fineness of the multifilament yarns is in the range from 700 to 3500 dtex.

5. Foldable bicycle tyre according to at least one of the preceding claims, **characterized in that** the polyester polyarylate has the following structure:

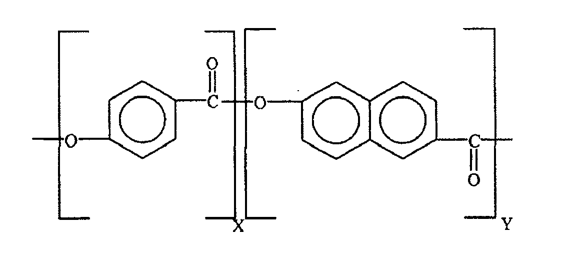

6. Foldable bicycle tyre according to at least one of the preceding claims, **characterized in that** the bead cores (1) are formed of three to ten windings of the multifilament yarns.

7. Foldable bicycle tyre according to at least one of the preceding claims, **characterized in that** the carcase (2) contains multifilament yarns of polyester polyarylate filaments as textile strengthening members, the filaments having been spun from molten liquid crystal polymer.

8. Foldable bicycle tyre according to at least one of the preceding claims, **characterized in that** it additionally has a side wall protection ply of at least one ply of textile strengthening members on the outer surface of the carcase (2) in the region of the side walls.

9. Foldable bicycle tyre according to at least one of the preceding claims, **characterized in that** it has at least one additional reinforcing ply (3), which contains strengthening members and is disposed between carcase (2) and tread strip (4) and/or between the carcase plies underneath the tread strip (4) and/or within the tread strip (4).

## Revendications

1. Bandage repliable pour bicyclette, qui présente deux âmes de bourrelet (1) en fils non métalliques, une carcasse (2) enroulée autour des âmes de bourrelet (1) formée d'au moins une couche de renforts textiles et une bande de roulement (4),
**caractérisé en ce que**
les âmes de bourrelet (1) contiennent comme renforts textiles des fils multifilaments en polyester-polyarylate, les filaments étant filés à partir d'un polymère à cristaux liquides fondu.

2. Bandage repliable pour bicyclette selon la revendication 1, **caractérisé en ce que** le fil multifilament contient plus de 200 filaments de polyester-polyarylate.

3. Bandage repliable pour bicyclette selon les revendications 1 ou 2, **caractérisé en ce que** les filaments de polyester-polyarylate ont un diamètre inférieur à 40 µm.

4. Bandage repliable pour bicyclette selon au moins l'une des revendications précédentes, **caractérisé en ce que** les fils multifilaments ont une finesse de 700 à 3 500 dtex.

5. Bandage repliable pour bicyclette selon au moins l'une des revendications précédentes, **caractérisé en ce que** le polyester-polyarylate présente la structure suivante :

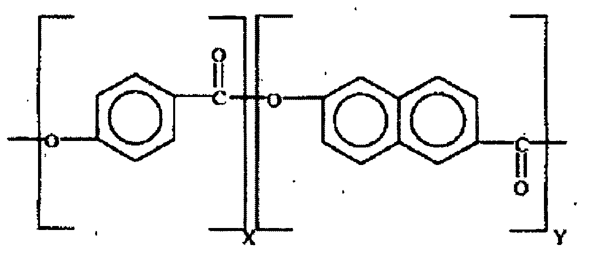

6. Bandage repliable pour bicyclette selon au moins l'une des revendications précédentes, **caractérisé en ce que** les âmes de bourrelet (1) sont formées de trois à dix enroulements de fils multifilaments.

7. Bandage repliable pour bicyclette selon au moins l'une des revendications précédentes, **caractérisé en ce que** la carcasse (2) contient comme renforts textiles des fils multifilaments en polyester-polyarylate, les filaments étant filés à partir d'un polymère à cristaux liquides fondu.

8. Bandage repliable pour bicyclette selon au moins l'une des revendications précédentes, **caractérisé en ce que** dans la zone occupée par ses parois latérales, il présente en outre une couche de protection des flancs constituée d'au moins une couche de renforts textiles sur le côté extérieur de la carcasse (2).

9. Bandage repliable pour bicyclette selon au moins l'une des revendications précédentes, **caractérisé en ce qu'**il présente au moins une couche supplémentaire de renforts (3) qui contient des renforts et qui est disposée entre la carcasse (2) et la bande de roulement (4) et/ou entre les couches de carcasse situées en dessous de la bande de roulement (4) et/ou à l'intérieur de la bande de roulement (4).
